# EUROPEAN PATENT SPECIFICATION

(11) **EP 1 565 847 B1**
(45) Date of publication and mention of the grant of the patent: **19.11.2008**
(21) Application number: 03811833.7
(22) Date of filing: 20.11.2003
(51) Int. Cl.: G06F 17/30

(54) **Method and System for Linking Lecacy DVD Discs to related Websites**
Verfahren und System zum Verknüpfen von alten DVD Disks mit zugehörigen Websites
Procédé et système déstinés à relier des vieux disques DVD à des sites web.

(30) Priority: 22.11.2002 CN 02152299
(43) Date of publication of application: 24.08.2005
(73) Proprietor: Koninklijke Philips Electronics N.V., 5621 BA Eindhoven (NL)
(72) Inventor: KELLY, Declan, Philips Electronics China, 200070 Shanghai (IE); WANG, Bei, Philips Electronics China, 200070 Shanghai (CN); PENG, Yang, Philips Electronics China, 200070 Shanghai (CN); HE, Dahua, Philips Electronics China, 200070 Shanghai (CN)
(74) Representative: Uittenbogaard, Frank
(86) International application number: PCT/IB2003/005285
(87) International publication number: WO 2004/049207

(56) References cited:
- WO-A-02/15024
- WO-A-02/46968
- WO-A-98/25269

## Description

### BACKGROUND OF THE INVENTION

The invention relates generally to DVD players, and more particularly to WebDVD players that allow existing legacy DVD discs to be linked to related web sites.

WebDVD, also known as Internet DVD, online DVD, enhanced navigation (ENav) DVD, etc., is a powerful concept of enhancing DVD-Video with Internet technology. WebDVD combines the best of DVD with the best of the Internet, so that they nicely complement each other and find applications in many areas. For example, a WebDVD movie can be connected to the Internet for promotional deals, viewer discussion forums, multiplayer games, etc. A marketing disc can entice viewers with gorgeous video products backed up by web pages for on-the-spot purchases. The possibilities are endless. WebDVD titles take advantage of the timeliness of the Internet with automatic software updates, supplemental content as new information becomes available, updated links to related web pages, current news and events, and special offers of associated services and products, etc. Thus, even after the WebDVD disc leaves the hands of the developers, it can still be improved or refreshed. What would otherwise be a static medium becomes dynamic and renewable, extending the life of the product.

The DVD Forum, an industrial consortium (http://www.dvdforum.org), is now defining a standard for web contents linked to WebDVD-Video discs. It allows DVD-Video discs to include built-in web links to web sites that contain contents related to the specific discs. The web sites may include new navigation menus for the player to download, so that the player can use them instead of the original DVD menus.

For existing legacy DVD-Video discs, however, it is not possible to have the enhanced contents provided on a web site and used in connection with the discs in the same way as for new WebDVD-Video discs. This would hinder and in fact prevent the high growth potentials of e-commerce activities in connection with playing the uncountable number of legacy discs by their owners.

Therefore, there is an urgent need to provide a WebDVD player that can locate a web site with contents related to an existing legacy DVD disc.

International patent application publication WO02/15024A1 teaches to read navigation information from the DVD, calculate a signature and then to use this signature to search a database either in the player or on a web server in order to identity a URL for web content related to the disc. Specifically it proposes to use the C-PBIT (Cell PlayBack Information Table) to generate the signature.

### SUMMARY OF THE INVENTION

The present invention provides a WebDVD player that can link legacy DVD discs to related web sites in a flexible and more efficient manner, in addition to playing normal WebDVD discs.

This object is solved by the subject-matter of the independent claims. Preferred embodiments are defined in the dependent claims.

Other objects and attainments together with a fuller understanding of the invention will become apparent and appreciated by referring to the following description and claims taken in conjunction with the accompanying drawings.

### BRIEF DESCRIPTION OF THE DRAWINGS

The invention is explained in further detail, and by way of example, with reference to the accompanying drawings wherein:
FIG. 1 illustrates a connection between a WebDVD player to the Internet according to an example of the invention;
FIG. 2 illustrates a detailed process of locating a related web site for a particular disc according to a first example of the invention; and
FIG. 3 illustrates a detailed process of locating a related web site for a particular disc according to a second example of the invention.

Throughout the drawings, the same reference numerals indicate similar or corresponding features or functions.

### DETAILED DESCRIPTION OF THE PREFERRED EMBODIMENTS

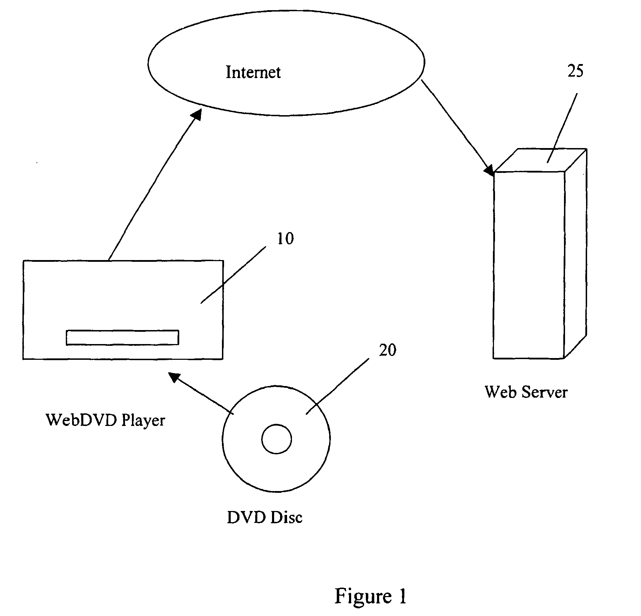

FIG. 1 illustrates a connection between a WebDVD player 10 to the Internet according to an example of the invention. As illustrated, a DVD-Video disc 20 can be inserted into a WebDVD player 10 to interact with related web sites on a web server 25. Player 10 may also be implemented in other forms, e.g., a PC, etc. Disc 20 may be either a WebDVD-Video disc or an existing legacy DVD-Video disc. In order to link a legacy DVD-Video disc to a related web site, player 10 makes use of a PVR_ID (Provider Unique ID) of the disc that uniquely identifies the content provider of the disc and a title ID (Title_ID) of the disc that uniquely identifies a specific title of the disc (e.g., a movie).

A PVR_ID is present on every legacy DVD-Video disc and is located in a VMGI_MAT (Video Manager Information Management Table) data structure, as illustrated in Table 1.

**Table 1: Partial Data Structure of VMGI_MA T**

| Relative byte position in data structure | Contents | Number of bytes |
|---|---|---|
| 0 to 11 | VMG_ID (VMG Identifier) | 12 |
| ... | ... | ... |
| 64 to 95 | PVR_ID (Provider unique ID) | 32 |
| ... | ... | ... |

The VMGI_MAT contains control data for DVD video. The PVR_ID is described with 32 bytes using the character set code of ISO646. When PVR_ID is less than 32 bytes, 00h will be described in the unused area.

The Title_ID, however, is not defined in the DVD-Video standards, but can be made available in several ways. One way is to use a unique serial number located in the BCA (Burst Cutting Area) available in some legacy DVD-Video discs. Alternatively, the Volume Set ID in the UDF (Universal Disc Format) file system of the disc may be used as the Title_ID. Another way is to use a unique Title_ID stored by the content provider in a data sector of the disc that contains private data. There are a number of places in the data structure of the disc where the content provider can store their own information including the unique Title_ID. For example, the lead-in area for storing the content provider information may be used for such purpose. A third way is to use a generated Title_ID. In this approach, a statistically unique Title_ID is generated from certain information on the disc. For example, the information in VMGI_MAT may be used to generate the Title_ID of a disc, as will be described in detail later. Using this approach ensures the availability of the title IDs in all existing legacy discs.

In a first example of the invention, player 10 includes a small database that contains a URL list of popular DVD content providers, e.g., AOL Time Warner, Walt Disney, etc. After disc 20 is loaded into player 10, the player reads the PVR_ID from the disc and uses the PVR_ID to find the URL of the associated content provider from the URL list. The URL is indexed to a table which contains a list of some popular Title_IDs produced by the content provider, location of the Title_ID on the disc, the method of deriving the Title_ID, and the corresponding URL of the related web site, as illustrated in Table 2. Player 10 then attempts to derive the Title_ID of the disc based on the data in the location and deriving method columns in the Table 2 and compares the derived Title_ID with the data in the Title_ID column to find the corresponding URL for locating the specific web pages.

**Table 2 Exemplary Format of a Small Database in the Player**

| Title_ID | Location | Deriving Method | Algorithm Type | URL of Related Web Site |
|---|---|---|---|---|
| 0110101... | BCA | Read | N/A | www.aoltw.com |
| ... | ... | ... | ... | ... |
| 1011100... | VMGI_MAT | Generate ID | Type 2 | www.disney.com |
| ... | ... | ... | ... | ... |

In Table 2, the location of the Title_ID may be in BCA, a data sector containing private data, VMGI_MAT, or other places in the data structure of the disc. The deriving method column specifies a method of deriving the Title_ID, e.g., read the Title_ID directly from a specific location of the disc or use a particular algorithm, as indicated in the algorithm type column, to generate the Title_ID. A list of algorithms corresponds to those algorithm types in Table 2 is pre-stored in the player, so that the player can use the indicated algorithm and the relevant data to compute and generate the Title_ID. The URL of related web site column indicates the corresponding URL. For example, if the location column indicates "BCA" and the deriving method column indicates "Read", player 10 will try to read the BCA from the disc to find its Title_ID. However, not every DVD has BCA and also not every DVD player can read BCA. In this case, alternative method such as "Generate ID" may be used. In such case, player 10 will try to use the indicated algorithm to generate the Title_ID based on the information in the specified location (e.g., VMGI_MAT). There are many methods to generate the Title_ID. One way is to use a method similar to that in the CD-DB (CD Database) that links CDs to a service web site, utilizing the starting and ending addresses of the title sets or chapters to compute and generate the Title_ID. Another way is to use the information in the VMGI_ MAT to generate the Title_ID. For example, the data in all fields of VMGI_MAT can be added together and the sum can be divided by a particular number to generate the Title_ID.

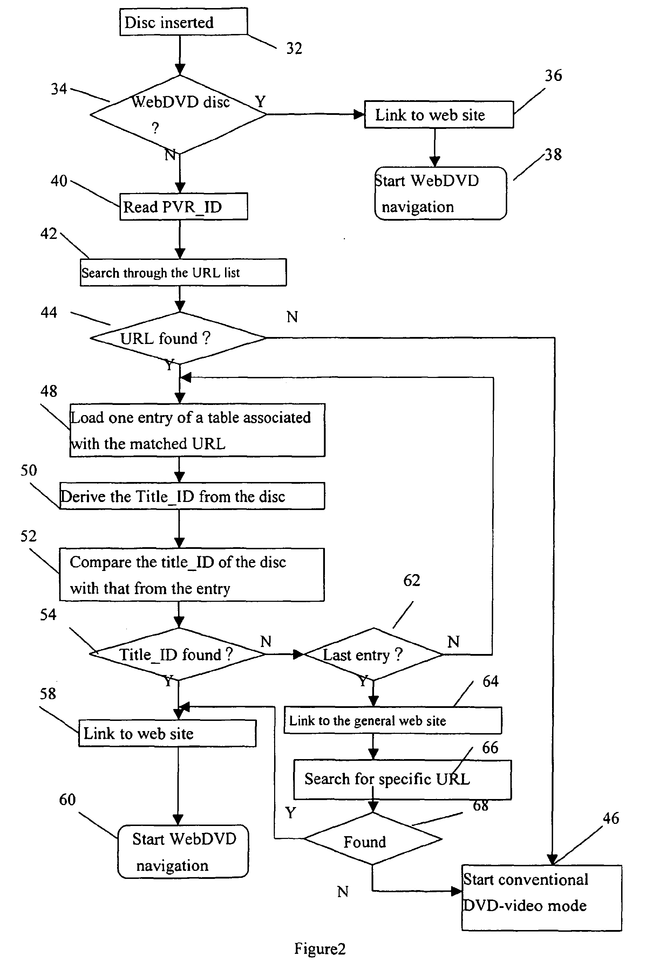

FIG. 2 illustrates a detailed process 30 of locating a related web site for a particular disc according to the first embodiment of the invention. After a disc is loaded into the player (step 32), the player detects whether the disc loaded is a WebDVD from the file system of the disc (step 34). If it is a WebDVD, the player links the disc to the related web site in accordance with the WebDVD standard adopted by the DVD Forum (step 36), and starts the WebDVD navigation (step 38).

On the other hand, if the disc is a legacy DVD, player 10 reads the PVR_ID from the disc to determine the associated content provider (step 40) and searches through the URL list in the database of the player (step 42) to find a corresponding URL of the content provider (step 44). If the URL is not in the list, player 10 will play the disc in a conventional manner by starting the conventional DVD-Video mode (step 46). If, however, the corresponding URL is found from the list, the URL is indexed to the table illustrated in Table 2. Then player 10 will load a first entry of the table that is associated with the URL into a memory of the player (step 48) and attempts to derive the Title_ID from the disc based on the information from the location, deriving method and algorithm type columns in that entry (step 50).

After the Title_ID of the disc is derived, it is compared with the data in the Title_ID column of the entry (step 52) to determine if there is a match (step 54). If there is a match, player 10 will retrieve the URL data in the URL column of the entry and use the URL data to link the disc to the corresponding web pages of the content provider (step 58) and start the WebDVD navigation (step 60). If, however, the derived Title_ID does not match the data in the Title_ID column of the entry, player 10 will determine whether the entry is the last one in the list (step 62). If so, the player will link the disc to the general web site of the content provider using the URL already found (step 64) and search for the specific URL for the disc in a similar manner as described above (step 66). The general web site would contain a table similar to Table 2. Whether the specific URL is found is next determined (step 68). If the specific URL is found, the player will link the disc to the specific URL (step 58) and start the WebDVD navigation (step 60). However, if it is not found, the player will play the disc in the conventional way (step 46).

In a variation of the first example, if the player cannot find the PVR_ID from the disc, the player will simply load one entry of the table into the memory and attempt to derive the Title_ID of the disc based on the data in the location, deriving method and algorithm type columns. The player then determines whether the derived Title_ID matches with the data in the Title_ID column of the entry. The subsequent operations are the same as those in the first embodiment.

According to a second example of the invention, a database similar to that in the player of the first embodiment is stored on a web server. This database has more comprehensive lists of the URL links to the web sites of the content providers and their video titles for accessing by the player. In the this example, after disc 20 is loaded into player 10, the player reads the PVR_ID and the Title_ID from the disc and links the disc to a source web site containing the database which may be provided by the player manufacturer or some other organization (e.g., DVD Forum) for searching a match.

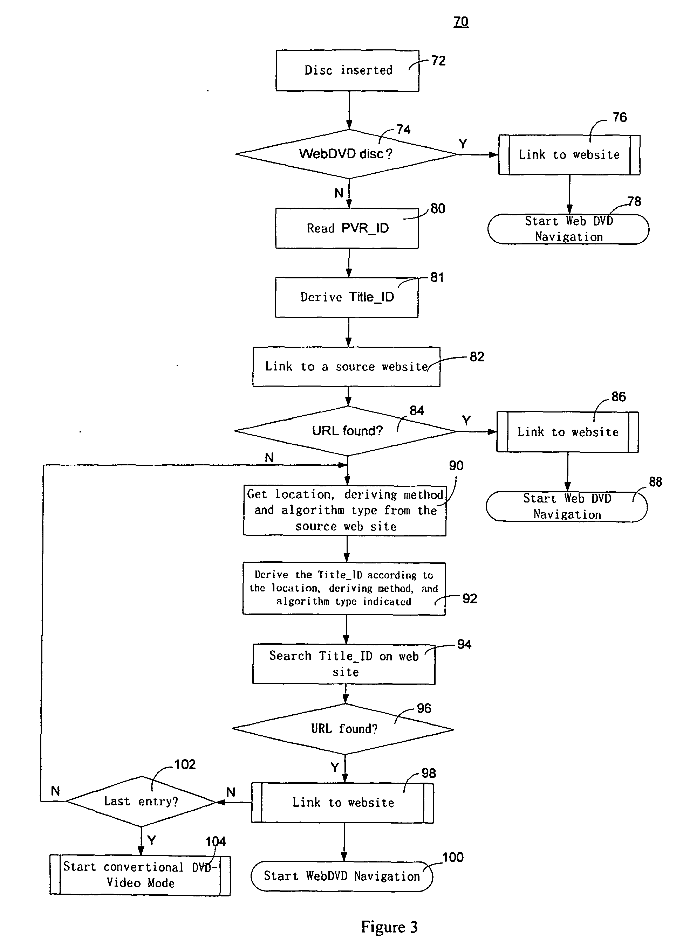

FIG. 3 illustrates a detailed process 70 of locating a related web site of a particular disc according to the second example of the invention. After a disc is loaded into the player (step 72), the player detects whether the disc loaded is a WebDVD from the file system of the disc (step 74). If it is a WebDVD, the player links the disc to the related web site in accordance with the WebDVD standard adopted by the DVD Forum (step 76), and start the WebDVD navigation (step 78).

On the other hand, if the disc is a legacy DVD, player 10 reads the PVR_ID (step 80) and derives the Title_ID from the disc (step 81). The Title_ID is derived in a default manner, e.g., by reading a particular location on the disc, such as BCA. The player links the disc to the source web site (step 82) for searching the corresponding URL from the comprehensive database, based on the PVR_ID and Title_ID (step 84). If the URL is found, player 10 will link the disc to the corresponding web site (step 86) and start the WebDVD navigation (step 88). If the URL is not found, it could mean that the Title_ID derived in the default manner is incorrect. Then player 10 will obtain the information about the location, deriving method of the Title_ID and algorithm type from a first entry in a table on the web site that is similar to Table 2 (step 90).

The player then attempts to derive the Title_ID of the disc according to the location, deriving method and algorithm type indicated by the first entry of the table (step 92). After deriving the Title_ID of the disc, player 10 will use the PVR_ID and Title_ID just derived to search for a corresponding URL from the database on the web site (step 94) to determine if a match is found (step 96). If the URL is found, player 10 will link the disc to the corresponding web site (step 98), and start the WebDVD navigation (step 100). However, if the URL is not found, a determination of whether the entry is the last one in the table is made (step 102). If it is, it means that the disc is not supported by the web site and player 10 will play the disc in a conventional manner by starting the conventional DVD-Video mode (step 104). If it is not, steps 90, 92, 94 and 96 will be repeated, along with steps 98 and 100 if applicable until either a match is found or all entries in the list have been examined.

A third example of the invention combines the first and second examples of the invention as described above. In the third example, the player contains a list of the popular content providers in a small database to allow a preliminary search of a corresponding URL. If after searching through this database no match is found, the source web site will be accessed by the player for conducting a more comprehensive search. The flowchart diagram for the third embodiment of the invention is based on that in FIG. 2, except that if the URL is not found at step 44, steps 81 through 104 in FIG. 3 will be implemented.

In the third example above, the database in the player may be periodically updated with new information from the source web site. Also, the player may cache the addresses of the specific web sites once they are accessed and delete old addresses not recently accessed so that when the disc is played next time, the contents will be loaded faster. Further, users may even-manually update the database with new web site addresses.

In the above, DVD-Video discs have been described in connection with the invention. The same principles of the invention can be applied to other types of discs, e.g., DVD-Audio discs and Super Audio CDs (SACDs).

While the invention has been described in conjunction with specific embodiments, it is evident that many alternatives, modifications and variations will be apparent to those skilled in the art in light of the foregoing description. Accordingly, it is intended to embrace all such alternatives, modifications and variations as fall within the scope of the appended claims.

## Claims

1. A method of linking a legacy disc to a related web site, the method comprising the steps of:
- retrieving (40) a provider unique identification PVR_ID from the legacy disc;
- finding (42, 44) a universal resource locator URL of a content provider corresponding to the provider unique identification by searching a universal resource locators list of content providers;
- in case the universal resource locator of the content provider is found, indexing (48) the universal resource locator of the content provider to a table comprising title entries, each title entry comprising a unique title identifier Title_ID of a disc produced by the content provider, a location of the unique title identifier on said disc, a method of deriving the unique title identifier from said location and a universal resource locator of a web site related to said disc by the unique title identifier;
- for each said title entry, deriving (50, 52, 54) a legacy disc unique title identifier from the legacy disc by reading said location using said method and comparing the legacy disc unique title identifier with the unique title identifier from said title entry, until the legacy disc unique title identifier matches the unique title identifier; and
- establishing a connection (58) to a web site related to the legacy disc using the universal resource locator from the title entry for which the legacy disc unique title identifier matches the unique title identifier.

2. A method as claimed in claim 1, wherein the method of deriving the unique title identifier comprises usage of an algorithm to generate the legacy disc unique title identifier.

3. A method as claimed in claim 1, wherein the location of the unique title identifier is a burst cutting area BCA.

4. A method as claimed in claim 1, wherein the location of the unique title identifier is a private data sector.

5. A method as claimed in claim 1, wherein the unique title identifier is a volume set ID in a universal disc file UDF file system of the disc.

6. A method as claimed in claim 1, wherein the universal resource locators list of content providers is stored on a web server.

7. A method as claimed in claim 1, wherein the table comprising the title entries is stored on a web server.

8. A method as claimed in claim 1, wherein the legacy disc is a DVD disc.

9. A disc playing device (10), comprising:
- means for storing a database comprising a universal resource locators URLs list of content providers, for each content provider the database further comprising a table of title entries, each title entry comprising a unique title identifier Title_ID of a disc produced by said each content provider, a location of the unique title identifier on said disc, a method of deriving the unique title identifier from said location and a universal resource locator of a web site related to said disc by the unique title identifier;
- means for retrieving a provider unique identification PVR_ID from a legacy disc;
- means for determining whether the retrieved PVR_ID corresponds to a universal resource locator URL of a content provider from the list;
- means for deriving a legacy disc unique title identifier for each title entry from a table corresponding to the content provider, using the location and the method specified in said each title entry;
- means for determining whether the legacy disc unique title identifier matches the unique title identifier specified in said each title entry;
- means for linking the legacy disc to a related web site using the universal resource locator specified in the title entry for which the legacy disc unique title identifier matches the unique title identifier.

10. A disc playing device as claimed in claim 9, wherein the location of the unique title identifier is a burst cutting area BCA.

11. A disc playing device as claimed in claim 9, wherein the location of the unique title identifier is a private data sector.

12. A disc playing device as claimed in claim 9, wherein the unique title identifier is a volume set ID in a universal disc file UDF file system of the disc.

13. A disc playing device as claimed in claim 9, further comprising means for accessing a web server comprising the database.

14. A disc playing device as claimed in claim 9, wherein the legacy disc is a DVD disc.

## Patentansprüche

1. Verfahren zum Verknüpfen einer alten Disk mit einer relatierten Website, wobei das Verfahren die nachfolgenden Verfahrensschritte umfasst:
- das Erfassen (40) einer providereigenen Identifikation PVR_ID von der alten Disk;
- das Finden (42, 44) eines universellen Quellenanzeigers URL eines Inhaltsproviders entsprechend dem einheitlichen Quellenanzeigers des Providers durch Suche einer universellen Quellenanzeigerliste mit Inhaltsprovidern;
- In dem Fall, wo der universelle Quellenanzeiger des Inhaltsproviders gefunden wird, das Indizieren (48) des universellen Quellenanzeigers des Inhaltsproviders in einer Tabelle mit Titeleingaben, wobei jede Titeleingabe einen einzigartigen Titelidentifizierer Title_ID einer von dem Inhaltsprovider geschaffenen Disk hat, mit einer Stelle des einzigartigen Titelidentifizierers auf der genannten Disk, und mit einem Verfahren zum Herleiten des einzigartigen Titelidentifizierers von der genannten Stelle und eines universellen Quellenanzeigers einer mit der genannten Disk relatierten Website durch den einzigartigen Titelidentifizierer;
- für jede genannte Titeleingabe, das Herleiten (50, 52, 54) einer einzigartigen Titelidentifizierers der alten Disk, und zwar **dadurch**, dass die genannte Stelle unter Anwendung des Verfahrens ausgelesen wird, und das Vergleichen des einzigartigen Titelidentifizierers der alten Disk mit dem einzigartigen Titelidentifizierer aus der genannten Titeleingabe, bis der einzigartige Titelidentifizierer der alten Disk mit dem einzigartigen Titelidentifizierer übereinstimmt; und
- das Herstellen einer Verbindung (58) mit einer mit der alten Disk relatierten Website, und zwar unter Verwendung des universellen Quellenanzeigers aus der Titeleingabe, für den der einzigartige Titelidentifizierer der alten Disk mit dem einzigartigen Titelidentifizierer übereinstimmt.

2. Verfahren nach Anspruch 1, wobei das Verfahren zum Herleiten des einzigartigen Titelidentifizierers das Anwenden eines Algorithmus umfasst, und zwar zum Erzeugen des einzigartigen Titelidentifizierers der alten Disk.

3. Verfahren nach Anspruch 1, wobei die Stelle des einzigartigen Titelidentifizierers ein "Burst Cutting Area" BCA ist.

4. Verfahren nach Anspruch 1, wobei die Stelle des einzigartigen Titelidentifizierers ein privater Datensektor ist.

5. Verfahren nach Anspruch 1, wobei der einzigartige Titelidentifizierer ein nach Volumen eingestellter ID in einem universellen Diskdatei UDF System der Disk ist.

6. Verfahren nach Anspruch 1, wobei die Liste des universellen Quellenanzeigers mit Inhaltsprovidern auf einem Webserver gespeichert ist.

7. Verfahren nach Anspruch 1, wobei die Tabelle mit den Titeleingaben auf einem Webserver gespeichert ist.

8. Verfahren nach Anspruch 1, wobei die alte Disk eine DVD Disk ist.

9. Diskabspielvorrichtung (10), die Folgendes umfasst:
- Mittel zum Speichern einer Datenbank mit einer Liste universeller Quellenanzeiger URLs mit Inhaltsprovidern, wobei für jeden Inhaltsprovider die Datenbank weiterhin eine Tabelle mit Titeleingaben enthält, wobei jede Titeleingabe einen einzigartigen Titelidentifizierer Title_ID einer von dem genannten Inhaltsprovider geschaffenen Disk, eine Stelle des einzigartigen Titelidentifizierers auf der genannten Disk, ein Verfahren zum herleiten des einzigartigen Titelidentifizierers von der genannten Stelle und einen universellen Quellenanzeiger einer mit der genannten Disk relatierten Website durch den einzigartigen Titelidentifizierer enthält;
- Mittel zum Erfassen einer providereigenen Identifikation PVR_ID von der alten Disk;
- Mittel um zu ermitteln, ob der erfasste PVR_ID mit einem universellen Quellenanzeiger URL des Inhaltsproviders aus der Liste übereinstimmt;
- Mittel zum herleiten eines einzigartigen Titelidentifizierers der alten Disk für jede Titeleingabe aus einer Tabelle, die mit dem Inhaltsprovider übereinstimmt, und zwar unter Verwendung der Stelle und unter Anwendung des in der genannten Titeleingabe spezifizierten Verfahrens;
- Mittel um zu ermitteln, ob der einzigartige Titelidentifizierer der alten Disk mit dem in der genannten Titeleingabe spezifizierten einzigartigen Titelidentifizierer übereinstimmt;
- Mittel zum Verknüpfen der alten Disk mit einer relatierten Website, und zwar unter Verwendung des in der Titeleingabe spezifizierten universellen Quellenanzeigers, für den der einzigartige Titelidentifizierer der alten Disk mit dem einzigartigen Titelidentifizierer übereinstimmt.

10. Diskabspielvorrichtung nach Anspruch 9, wobei die Stelle des einzigartigen Titelidentifizierers ein "Burst Cuttung Area" BCA ist.

11. Diskabspielvorrichtung nach Anspruch 9, wobei die Stelle des einzigartigen Titelidentifizierers ein privater Datensektor ist.

12. Diskabspielvorrichtung nach Anspruch 9, wobei der einzigartige Titelidentifizierer ein nach Volumen eingestellter ID in einem universellen Diskdateisystem der Disk ist.

13. Diskabspielvorrichtung nach Anspruch 9, die weiterhin Mittel zum Zugreifen auf einen Webserver mit der Datenbank aufweist.

14. Diskabspielvorrichtung nach Anspruch 9, wobei die alte Disk eine DVD Disk ist.

## Revendications

1. Procédé de liaison d'un disque de legs à un site Web apparenté, le procédé comprenant les étapes consistant à:
- récupérer (40) une identification unique de fournisseur PVR_ID à partir du disque de legs;
- trouver (42, 44) un repère universel de ressource URL d'un fournisseur de contenu correspondant à l'identification unique de fournisseur en recherchant une liste de repères universels de ressource de fournisseurs de contenu;
- indexer (48), dans le cas où le repère universel de ressource du fournisseur de contenu serait trouvé, le repère universel de ressource du fournisseur de contenu à une table comprenant des entrées de titre, chaque entrée de titre comprenant un identificateur unique de titre Title_ID d'un disque qui est produit par le fournisseur de contenu, un emplacement de l'identificateur unique de titre sur ledit disque, un procédé pour dériver l'identificateur unique de titre à partir dudit emplacement et un repère universel de ressource d'un site Web qui est apparenté audit disque par l'identificateur unique de titre;
- dériver (50, 52, 54), pour chaque ladite entrée de titre, un identificateur unique de titre de disque de legs à partir du disque de legs en lisant ledit emplacement à l'aide dudit procédé et en comparant l'identificateur unique de titre de disque de legs à l'identificateur unique de titre en provenance de ladite entrée de titre jusqu'à ce que l'identificateur unique de titre de disque de legs corresponde à l'identificateur unique de titre; et
- établir une connexion (58) à un site Web qui est apparenté au disque de legs en utilisant le repère universel de ressource en provenance de l'entrée de titre pour laquelle l'identificateur unique de titre de disque de legs correspond à l'identificateur unique de titre.

2. Procédé selon la revendication 1, dans lequel le procédé de dérivation de l'identificateur unique de titre comprend l'usage d'un algorithme pour générer l'identificateur unique de titre de disque de legs.

3. Procédé selon la revendication 1, dans lequel l'emplacement de l'identificateur unique de titre est une zone de rafale de coupe BCA.

4. Procédé selon la revendication 1, dans lequel l'emplacement de l'identificateur unique de titre est un secteur de données privées.

5. Procédé selon la revendication 1, dans lequel l'identificateur unique de titre est un ensemble de volume ID dans un système universel de fichiers de disque UDF du disque.

6. Procédé selon la revendication 1, dans lequel la liste de repères universels de ressource des fournisseurs de contenu est stockée sur un serveur Web.

7. Procédé selon la revendication 1, dans lequel la table comprenant les entrées de titre est stockée sur un serveur Web.

8. Procédé selon la revendication 1, dans lequel le disque de legs est un vidéodisque numérique.

9. Dispositif de lecture de disque (10), comprenant:
- des moyens pour stocker une base de données comprenant une liste de repères universels de ressource URLs de fournisseurs de contenu, la base de données comprenant encore, pour chaque fournisseur de contenu, une table d'entrées de titre, chaque entrée de titre comprenant un identificateur unique de titre Title_ID d'un disque qui est produit par ledit chaque fournisseur de contenu, un emplacement de identificateur unique de titre sur ledit disque, un procédé pour dériver l'identificateur unique de titre à partir dudit emplacement et un repère universel de ressource d'un site Web qui est apparenté audit disque par l'identificateur unique de titre;
- des moyens pour récupérer une identification unique de fournisseur PVR_ID à partir d'un disque de legs;
- des moyens pour déterminer si l'identification unique de fournisseur PVR_ID qui est récupérée correspond à un repère universel de ressource URL d'un fournisseur de contenu en provenance de la liste;
- des moyens pour dériver un identificateur unique de titre de disque de legs pour chaque entrée de titre à partir d'une table correspondant au fournisseur de contenu en utilisant l'emplacement et le procédé qui sont spécifiés dans ladite chaque entrée de titre;
- des moyens pour déterminer si l'identificateur unique de titre de disque de legs correspond à l'identificateur unique de titre qui est spécifié dans ladite chaque entrée de titre;
- des moyens pour lier le disque de legs à un site Web apparenté en utilisant le repère universel de ressource qui est spécifié dans l'entrée de titre pour laquelle l'identificateur unique de titre de disque de legs correspond à l'identificateur unique de titre.

10. Dispositif de lecture de disque selon la revendication 9, dans lequel l'emplacement de l'identificateur unique de titre est une zone de rafale de coupe BCA.

11. Dispositif de lecture de disque selon la revendication 9, dans lequel l'emplacement de l'identificateur unique de titre est un secteur de données privées.

12. Dispositif de lecture de disque selon la revendication 9, dans lequel l'identificateur unique de titre est un ensemble de volume ID dans un système universel de fichiers de disque UDF du disque.

13. Dispositif de lecture de disque selon la revendication 9, comprenant encore des moyens pour accéder à un serveur Web comprenant la base de données.

14. Dispositif de lecture de disque selon la revendication 9, dans lequel le disque de legs est un vidéodisque numérique.
